# EUROPÄISCHE PATENTSCHRIFT

(11) **EP 4 065 999 B1**
(45) Veröffentlichungstag und Bekanntmachung des Hinweises auf die Patenterteilung: **11.09.2024**
(21) Anmeldenummer: 20793694.9
(22) Anmeldetag: 21.10.2020
(51) Int. Cl.: G01R 35/00, H02P 21/00, H02P 21/05

(54) **VERFAHREN UND VORRICHTUNG ZUR KALIBRIERUNG EINER REGELUNG EINER ELEKTRISCHEN MASCHINE**
METHOD AND DEVICE FOR CALIBRATING A CONTROLLER OF AN ELECTRIC MACHINE
PROCÉDÉ ET DISPOSITIF POUR ÉTALONNER UNE COMMANDE D'UNE MACHINE ÉLECTRIQUE

(30) Priorität: 29.11.2019 DE 102019218533
(43) Veröffentlichungstag der Anmeldung: 05.10.2022
(73) Patentinhaber: Robert Bosch GmbH, 70442 Stuttgart (DE)
(72) Erfinder: HIRSCH, Michele, 73730 Esslingen (DE); LEE, Wei-Lung, 74321 Bietigheim-Bissingen (DE); PAULUS, Sebastian, 73728 Esslingen Am Neckar (DE)
(86) Internationale Anmeldenummer: PCT/EP2020/079582
(87) Internationale Veröffentlichungsnummer: WO 2021/104760

(56) Entgegenhaltungen:
- WO-A1-2019/242733
- CN-A- 108 696 219
- DE-A1- 102011 011 941
- DE-A1- 102017 208 769

## Beschreibung

Die Erfindung betrifft ein Verfahren und eine Vorrichtung zur Kalibrierung einer Regelung einer elektrischen Maschine. Ferner betrifft die Erfindung ein elektrisches Antriebssystem mit einer entsprechenden Vorrichtung und ein Fahrzeug mit einem elektrischen Antriebssystem sowie ein Computerprogramm und ein computerlesbares Speichermedium.

### Stand der Technik

Die Druckschriften DE 10 2011 011941 A1, CN 108 696 219 A und DE 10 2017 208769 A1 offenbaren Verfahren und Vorrichtungen zur Kalibrierung einer Regelung einer elektrischen Maschine.

Elektrische Drehfeldmaschinen, insbesondere permanenterregte Synchronmaschinen (PSM) mit vergrabenen Magneten, werden für die Erzeugung eines Wunschmomentes mittels einer geeigneten Kombination von direktem Drehmoment und Reluktanzmoment angesteuert. Bei der feldorientierten Regelung werden das direkte Drehmoment und das Reluktanzmoment mittels entsprechender Wahl der d- und q-Strom- Betriebspunkte (id,iq) im rotorfesten Koordinatensystem ausgewählt. Die elektrischen Maschinen erzeugen beim Betrieb neben der Abgabe eines gleichmäßigen mittleren Drehmomentes auch harmonische Oberschwingungen des Drehmomentes, die sich z.B. aufgrund von nicht ideal sinusförmigen Magnetfeldern, Windungsanordnungen, Nutung, Zahnform, Sättigungseffekten und/oder anderen Effekten ausbilden.

Solche Effekte führen zu Kraftwellen zwischen Rotor und Stator, die bei charakteristischen Ordnungen als tangentiale und radiale Zahnkräfte auf die Statorzähne wirken, und von dort durch das mechanische Übertragungsverhalten der elektrischen Maschine als Schwingungen in der Maschine, des Maschinengehäuses und angekoppelten Elementen und damit als Körper- und Luftschall oder Oberflächenschwingungen wahrnehmbar werden. Solche Schwingungen können mit Hilfe von zusätzlich gezielt eingeprägten Stromharmonischen, mit passenden Ordnungen, zu dem eigentlich vorgegebenen Phasenstrom reduziert oder verstärkt werden. Bekannt ist, Parameter für diese einzuprägenden Stromharmonischen beispielsweise aus einem Kennfeld in Abhängigkeit beispielsweise des einzustellenden Drehmomentes oder eines Betriebspunktes auszulesen und bei dem Betrieb der elektrischen Maschine entsprechende Stromharmonische mit dem eigentlichen Phasenstrom zu überlagern. Falls keine hinreichend genaue modellmäßige Beschreibung der relevanten Effekte der elektrischen Maschine verfügbar ist, z.B. aufgrund von Exemplartoleranzen etc, aus der die Parameter simulativ ermittelt werden können, müssen die Parameter anderweitig bestimmt werden. Zur Bestimmung der Parameter für diese Stromharmonischen ist viel Applikations- bzw. Kalibrierungsaufwand am Prüfstand notwendig. Dabei werden bevorzugt z.B. Oberflächen-Beschleunigungen/ -Geschwindigkeiten, Schallabstrahlung im Umfeld der elektrischen Maschine oder Drehmomentenrippel oder Schwingungen des Drehmomentes ermittelt. Mittels geeigneter Messsignale werden zur Bestimmung der Parameter der einzuprägenden Stromharmonischen beispielsweise bevorzugt ein Minimum für ein Eingrößensystem oder ein Optimum für ein Mehrgrößensystem mit konkurrierenden Zielen iterativ ermittelt. Sofern im Anrieb ein Drehmomentsensor verfügbar ist, ist eine Kalibrierung auch anhand dieses Sensorsignals möglich, wobei die Empfindlichkeit des Sensors entsprechend hoch sein muss, um die im Vergleich zum Nutzdrehmoment geringen Drehmomentenrippel messtechnisch zugänglich zu haben. Ein Drehmomentensensor ist kostenintensiv und in vielen Anwendungen daher nicht standardmäßig vorhanden.

Es besteht daher ein Bedürfnis für alternative Verfahren und Vorrichtungen zur Kalibrierung einer Regelung einer elektrischen Maschine.

### Offenbarung der Erfindung

Es wird ein Verfahren zur Kalibrierung einer Regelung einer elektrischen Maschine bereitgestellt, mit den Schritten:
Vorgeben eines ersten Signals zur Erzeugung eines sinusförmigen Phasenstroms zur Bestromung mindestens einer Wicklung einer elektrischen Maschine.

Überlagern des ersten Signals mit einem Testsignal zur Erzeugung mindestens einer harmonischen Schwingung mit einer vorbestimmten Anregungsamplitude und/ oder Phasenlage relativ zum Phasenstrom, welche den Phasenstrom überlagert.

Erfassen eines aus der Überlagerung des Phasenstroms und der harmonischen Schwingung resultierenden Antwortsignals, insbesondere dessen Antwortamplitude, mittels eines Sensors.

Mindestens dreifaches Wiederholen der zwei vorhergehenden Schritte "Überlagern" und "Erfassen" mit sich unterscheidenden vorgegebenen Testsignalen, zur Erzeugung weiterer harmonischer Schwingungen mit vorgebbaren Anregungsamplituden und/ oder Phasenlagen relativ zum Phasenstrom, welche den Phasenstrom überlagern. Ermitteln eines Minimums einer Antwortfläche, welches sich in Abhängigkeit der resultierenden Antwortsignale der mittels der Testsignale erzeugten harmonischen Schwingungen über einen bevorzugt vorgebbaren Anregungsamplitudenbereich und Phasenlagenbereich ergibt.

Bestimmen eines kalibrierten Signals zur Erzeugung einer harmonischen Schwingung mit einer vorbestimmten Anregungsamplitude und einer Phasenlage relativ zum Phasenstrom in Abhängigkeit des ermittelten Minimums, für welches bevorzugt ein Antwortsignal mit minimaler Antwortamplitude resultiert. Betreiben der Regelung der elektrischen Maschine; wobei das erste Signal zur Erzeugung eines sinusförmigen Phasenstroms zur Bestromung einer Wicklung der elektrischen Maschine vorgegeben wird und das bestimmte kalibrierte Signal zur Erzeugung der harmonischen Schwingung überlagert wird.

Der Betrieb elektrischer Maschinen mittels feldorientierten Regelungen ist bekannt. Dabei werden die Wechselgrößen der Phasenströme jeweils in ein mit der Frequenz der Wechselgrößen rotierendes Koordinatensystem übertragen. Innerhalb des rotierenden Koordinatensystems ergeben sich dann im stationären Betrieb der elektrischen Maschine aus den Wechselgrößen Gleichgrößen, auf die alle üblichen Verfahren der Regelungstechnik angewandt werden können. Aufgrund der mehrphasigen phasenversetzten in den Stator eingeprägten Wechselströme ergibt sich beim Betrieb der elektrischen Maschine ein drehendes Magnetfeld, bevorzugt beschrieben als rotierender verketteter magnetischer Fluss im statorfesten Koordinatensystem bzw. als zeitlich konstanter verketteter Fluss im rotierenden rotorfesten (d/q-) Koordinatensystem oder feldorientierten System.

Die Regelung der elektrischen Maschine gibt, bevorzugt in Abhängigkeit eines vorgebbaren Drehmomentwertes, ein Signal zur Erzeugung eines sinusförmigen Phasenstroms vor. Der sinusförmige Phasenstrom fließt bevorzugt durch den Stator und entspricht somit dem Statorstrom. Innerhalb des rotierenden Koordinatensystems, dem d/q-Koordinatensystems oder feldorientierten System, welches sich synchron mit dem Rotorfluss, oder Permanentmagnetfluss in einer PSM, dreht und dessen d-Achse in Richtung des Rotorflusses zeigt, wird ein Statorstrom als Statorstromzeiger oder Statorstromvektor repräsentiert, welcher über seine Länge und seine Richtung charakterisiert wird. Dieser Stromzeiger dreht sich synchron mit dem rotierenden Stator- oder Rotorfluss der elektrischen Maschine. In dem d/q Koordinatensystem kann der Stromzeiger entsprechend seiner Länge und seiner Richtung mittels zwei senkrecht aufeinander stehenden Komponenten Id und Iq dargestellt werden, welche im stationären Fall Gleichgrößen sind. Dem ersten Signal zur Erzeugung des sinusförmigen Phasenstroms wird ein Testsignal überlagert zur Erzeugung einer harmonischen Schwingung mit einer vorbestimmten Amplitude und/ oder Phasenlage relativ zum sinusförmigen Phasenstrom, welche den sinusförmigen Phasenstrom überlagert. Die so erzeugte vorbestimmte Amplitude wird Anregungsamplitude genannt. Bevorzugt ist die harmonische Schwingung eine harmonische Oberschwingung einer vorgegebenen Ordnung relativ zum sinusförmigen Phasenstrom, welche den sinusförmigen Phasenstrom überlagert. Diese Überlagerung führt zu einer veränderten Schwingung des abgegebenen Drehmomentes und/oder der zwischen Rotor und Stator wirkenden Kräfte einer angeschlossenen elektrischen Maschine. Diese Schwingung im Drehmoment bzw. der Kräfte führt aufgrund der mechanischen Kopplung der elektrischen Maschine mit dem Gehäuse zu einer mechanischen und/ oder akustischen Schwingung des Gehäuses und damit verbundener Bauteile. Der gesamte Übertragungspfad führt von einer überlagerten harmonischen Stromschwingung über Schwingungen in elektromagnetischen Kräften und Drehmomenten zu einer mechanischen Schwingung oder Geräuschanregung einer angeschlossenen elektrischen Maschine und/oder der Leistungselektronik, die mit einem geeigneten Sensor, z.B. akustisch, messbar ist. Diese aus der Überlagerung des Phasenstroms und der harmonischen Schwingung resultierende Schwingung wird als Antwortsignal mittels eines Sensors erfasst. Bevorzugt wird als Antwortsignal eine harmonische Schwingung des Drehmoments erfasst.

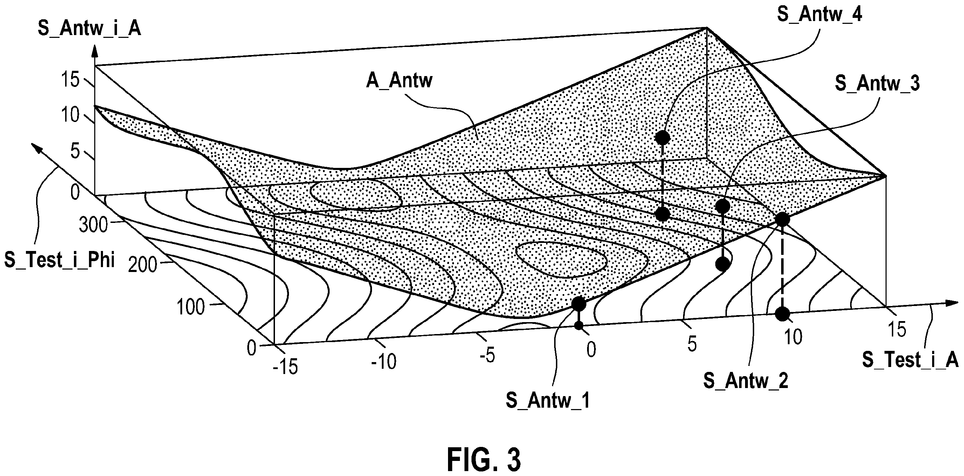

Diese Überlagerung wird mehrfach, bevorzugt mindestens dreimal, mit unterschiedlichen, bevorzugt vorgegebenen, Testsignalen, zur Erzeugung weiterer harmonischer Schwingungen mit vorgebbaren Anregungsamplituden und/ oder Phasenlagen relativ zum Phasenstrom wiederholt. Bevorzugt wird ein erstes Testsignal S_Test_1 zur Erzeugung einer harmonischen Schwingung mit einer vorbestimmten Anregungsamplitude S_Test_1_A= 0 und einer beliebigen Phasenlage relativ zum Phasenstrom vorgegeben. Weiter werden bevorzugt drei weitere Testsignale S_Test_2, S_Test_3, S_Test_4 zur Erzeugung einer harmonischen Schwingung mit einer gemeinsamen festen vorbestimmten Anregungsamplitude S_Test_2,3,4_A>0 und gleichmäßig über 360° verteilter Phasenlage relativ zum Phasenstrom, bspw. 0, 120°, 240° oder 60°, 180°, 300° vorgegeben. Mittels der entsprechend mindestens vier unterschiedlichen erfassten Antwortsignale ergibt sich eine charakteristische, eindeutige, mehrfach gewölbte Antwortfläche. Zur Erzeugung weiterer Stützstellen der Antwortfläche können bevorzugt weitere Testsignale zur Erzeugung weiterer harmonischer Schwingungen mit vorgebbaren und/oder unterschiedlichen Anregungsamplituden und/ oder Phasenlagen relativ zum Phasenstrom vorgegeben werden. Wie in Figur 3 dargestellt weist die sich aus den Antwortsignalen, insbesondere deren Amplituden oder Antwortamplituden, ergebende Antwortfläche bei der Betrachtung über verschiedene Anregungsamplituden der Testsignale und deren Phasenlagen eine charakteristische Form/Topologie auf. Die Antwortfläche erstreckt sich bevorzugt über die Phasenlagen 0 bis 360° Grad und die Anregungsamplituden der Testsignale in negativer und/oder positiver Größe. Die Antwortfläche enthält bei einer Darstellung über die Phasenlagen 0 bis 360° Grad und die positiven und negativen Anregungsamplituden zwei Minima, einmal im Bereich der Anregungsamplituden>0 und einmal im Bereich der Anregungsamplituden<0 der mittels der Testsignale erzeugten harmonischen Schwingungen. Das erste Minimum wird über eine erste Minimumphasenlage und eine positive erste Minimumamplitude charakterisiert. Das zweite Minimum wird über eine zweite Minimumphasenlage und eine negative zweite Minimumamplitude charakterisiert. Die erste Minimumphasenlage ist 180° zur zweiten Minimumphasenlage verschoben.

Eine Überlagerung des ersten Signals mit einem zweiten Signal, bevorzugt ein Testsignal oder ein kalibriertes Signal, zur Erzeugung einer harmonischen Schwingung mit einer vorbestimmten Anregungsamplitude und einer Phasenlage, relativ zum Phasenstrom, die einer Anregungsamplitude und einer Phasenlage eines ermittelten Minimums entsprechen, also mit einer ersten oder zweiten Minimumphasenlage und einer entsprechenden ersten oder zweiten Minimumamplitude bewirkt eine Minimierung der seitens eines angeschlossenen Antriebssystems, umfassend eine angeschlossene elektrische Maschine, Leistungselektronik und/oder Antriebsstrang, erzeugten mechanischen Schwingungen oder Geräuschanregungen.

Die Topologie der Antwortfläche behält ihre Charakteristik unabhängig davon, ob die unbekannte harmonische Schwingung direkt berücksichtigt wird oder die Auswirkung auf eine messbare Größe nach dem Wirken eines linearen oder näherungsweise linearen Übertragungspfades betrachtet wird.

Neben anderen mathematischen Methoden zur Ermittlung der Lage der Minima einer solchen Antwortfläche in Abhängigkeit von ermittelten Antwortsignalen wird bevorzugt folgendermaßen vorgegangen:
Der Verlauf der Antwortamplituden der resultierenden Antwortsignale in Abhängigkeit von Testsignalen zur Erzeugung harmonischer Schwingungen mit einer gemeinsamen festen vorbestimmten Anregungsamplitude >>0 variiert für den Bereich mit Anregungsamplituden > 0 sinusförmig über deren Phasenlage relativ zum Phasenstrom.

Die Charakteristik der Antwortfläche ergibt für den Bereich mit Anregungsamplituden < 0 für den Verlauf der Antwortamplituden der resultierenden Antwortsignale in Abhängigkeit von Testsignalen zur Erzeugung harmonischer Schwingungen mit der invertierten oder negativen gemeinsamen festen vorbestimmten Anregungsamplitude einen sinusförmigen Verlauf mit 180° Phasenverschiebung über deren Phasenlage relativ zum Phasenstrom. Die Lage der Hoch- und Tiefpunkte dieser Verläufe entsprechen dabei der Lage der beiden Minima der Antwortfläche bzgl. der Phasenlage relativ zum Phasenstrom. Eine weitere Eigenschaft der Antwortfläche ist, dass der (positive) Gradient der Antwortfläche in negative und positive Richtung entlang zunehmender Beträge der Anregungsamplituden der mittels der Testsignale erzeugten harmonischen Schwingungen näherungsweise konstant ist.

Ein erster Schritt zur Ermittlung der Lage der Minima nutzt die Antwortsignale S_Antw_2,3,4, welche aus den Testsignalen zur Erzeugung harmonischer Schwingungen mit einer gemeinsamen festen vorbestimmten Anregungsamplitude >>0 resultieren, zur Ermittlung der Fourierkoeffizienten zur Ordnung 0 und 1 des Verhaltens der Antwortfläche für die zugehörige Anregungsamplitude. Aus den Fourierkoeffizienten werden das Minimum und das Maximum, bevorzugt deren Antwortamplitude und Phasenlage, des sinusförmigen Verlaufs der Antwortamplituden ermittelt. Dies wird bevorzugt für den Bereich mit Anregungsamplituden > 0 durchgeführt. In einem zweiten Schritt wird die weitere Eigenschaft der Antwortfläche genutzt, dass der Betrag des Gradienten der Antwortfläche in negative und positive Richtung entlang zunehmender Beträge der mittels der Testsignale zu erzeugenden Anregungsamplituden >> 0 näherungsweise konstant ist. Die zugehörige Steigung (slope) für den Bereich mit Anregungsamplituden > 0 wird beispielsweise aus der Höhe der Antwortamplitude des Antwortsignal S_Antw_1, welches in Abhängigkeit des ersten Testsignals resultiert, und der ermittelten Höhe des Maximums der Antwortamplitude des sinusförmigen Verlaufs, bei der Phasenlage des ermittelten Maximums des sinusförmigen Verlaufs, ermittelt. Der Wert oder die Höhe des Antwortsignals oder der Antwortamplitude, welches aus dem ersten Testsignal zur Erzeugung einer harmonischen Schwingung mit der vorbestimmten Anregungsamplitude S_Test_1_A = 0 resultiert, ist über die Phasenlage von 0 bis 360° konstant, da die Überlagerung des ersten Signals mit einem Testsignal zur Erzeugung einer harmonischen Schwingung mit der vorbestimmten Anregungsamplitude = 0, unabhängig von der mittels des Testsignals zu erzeugenden Phasenlage, keinen Einfluss auf die mittels dem ersten Signal erzeugte Antwortamplitude hat. Mit Hilfe der so ermittelten Steigung und beispielsweise des Minimums des sinusförmigen Verlaufs im Bereich der Anregungsamplituden <0 und des Maximums des sinusförmigen Verlaufs im Bereich der Anregungsamplituden >0 lassen sich 2 Geraden beschreiben. Eine erste Gerade G1 weist die ermittelte Steigung slope auf und geht bei der Phasenlage des ermittelten Maximums des sinusförmigen Verlaufs durch den Punkt der Höhe der Antwortamplitude, welche aus dem ersten Testsignal resultiert, und durch den Punkt der Höhe des Maximums des sinusförmigen Verlaufs welcher aus den Testsignalen zur Erzeugung harmonischer Schwingungen mit einer gemeinsamen festen vorbestimmten Anregungsamplitude >>0 resultiert.

Eine zweite Gerade G2 weist die negative ermittelte Steigung -slope auf und geht bei der Phasenlage des ermittelten Maximums des sinusförmigen Verlaufs durch den Punkt der Höhe des Minimums des sinusförmigen Verlaufs, welcher sich für den Bereich mit Anregungsamplituden < 0 der Antwortfläche, ergibt. Bevorzugt lassen sich zwei weitere Geraden G1' und G2' konstruieren, deren Phasenlage 180° verschoben ist zu den Geraden G1 und G2, wobei G1' den Punkt der ermittelten Höhe des Minimums der Antwortamplitude des sinusförmigen Verlaufs, bei der Phasenlage des ermittelten Minimums des sinusförmigen Verlaufs für den Bereich mit Anregungsamplituden > 0 schneidet. Die zwei Geraden G1 und G2 schneiden sich in einem ersten Minimum, dessen Position mittels der Anregungsamplitude und der Phasenlage bezüglich der Antwortfläche beschrieben wird. Für das erste Minimum ergibt sich eine erste Minimumphasenlage und als Anregungsamplitude eine erste (negative) Minimumamplitude. Die zwei Geraden G1' und G2` schneiden sich in einem zweiten Minimum, dessen Position mittels der Anregungsamplitude und der Phasenlage bezüglich der Antwortfläche beschrieben wird. Für das zweite Minimum ergibt sich eine zweite Minimumphasenlage und als Anregungsamplitude eine zweite (positive) Minimumamplitude. Die erste Minimumphasenlage ist 180° verschoben zur zweiten Minimumphasenlage. Der Betrag der ersten Minimumamplitude entspricht dem Betrag der zweiten Minimumamplitude, wobei das Vorzeichen einer Minimumamplitude negativ und das Vorzeichen der anderen Minimumamplitude positiv ist.

Mit Hilfe der so ermittelten Parameter Minimumamplitude und Minimumphasenlage der Minima der Antwortfläche können zum einen Parameter für ein kalibriertes Signal zur Erzeugung einer harmonischen Schwingung mit den Parameter Minimumamplitude als Anregungsamplitude und Minimumphasenlage als Phasenlage vorgegeben werden, welches bei einer Überlagerung mit dem ersten Signal zu einer Minimierung der mechanischen Schwingungen führt.

Zum anderen kann anhand der aus den Antwortamplituden der Testsignale ermittelten Steigung und Minima die eindeutige Antwortfläche konstruiert werden. So können aus der eindeutig resultierenden Antwortfläche Parameter für ein mittels des kalibrierten Signals zu erzeugenden harmonischen Schwingungen ausgelesen und vorgegeben werden, welches bei einer Überlagerung mit dem ersten Signal ein entsprechend an einem Punkt der Antwortfläche ermitteltes Antwortsignal oder Antwortamplitude bewirkt oder entsprechend eine mechanische Schwingung und somit einen Klang oder ein Geräusch bewirkt. Somit sind in Abhängigkeit der Antwortfläche gezielt vorgebbare Betriebspunkte einstellbar, indem kalibrierte Signale vorgegeben werden zur Erzeugung einer harmonischen Schwingung mit den Parametern Anregungsamplitude und Phasenlage eines entsprechenden Punktes der Antwortfläche.

Zur Bestimmung eines kalibrierten Signals zur Erzeugung einer harmonischen Schwingung mit den Parametern Anregungsamplitude und Phasenlage werden in Abhängigkeit eines der bestimmten Minima der resultierenden Antwortfläche, die Parameter für die zu erzeugende Anregungsamplitude und Phasenlage vorgeben. Bevorzugt werden die Parameter Minimumamplitude und Minimumphasenlage dieses Minimums übernommen. Bei Überlagerung des ersten Signals zur Erzeugung des sinusförmigen Phasenstroms und dem bevorzugten kalibrierten Signal wird die erzeugte Schwingung des Drehmoments minimal. Anschließend wird die Regelung der elektrischen Maschine mit einer Überlagerung des ersten Signals und des kalibrierten Signals betrieben zur Erzeugung eines sinusförmigen Phasenstroms zur Bestromung einer Wicklung der elektrischen Maschine und zur Erzeugung der harmonischen Schwingung.

Vorteilhaft wird ein Verfahren bereitgestellt, mit dem mittels einer vorab definierten Anzahl an harmonischen Anregungen oder Testsignalen eine Regelung einer elektrischen Maschine kalibriert wird. Aus der Korrelation der erfassten Antwortsignale wird ein vorgebbares Optimum der Schwingungen des Drehmomentes und/oder der zwischen Rotor und Stator wirkenden Kräfte, bevorzugt durch eine Vorwärtsberechnung, konstruiert. Der messtechnische (zeitliche) Aufwand und der rechentechnische Aufwand ist im Vorfeld der Kalibrierung bekannt und kann entsprechend eingeplant werden, beispielsweise für Betriebszustände mit hohem Außengeräusch und damit Maskierung von störenden Geräuschen für einen Fahrer eines elektrisch angetriebenen Fahrzeuges oder einen Betreiber einer angeschlossenen elektrischen Maschine während der Kalibrierung. Die wiederholten Messungen, das Erfassen der unterschiedlichen Antwortsignale, können zeitlich unabhängig voneinander ablaufen und somit mit Unterbrechungen durchgeführt werden, da kein direktes Feedback verwendet wird. Der erwartete Einfluss auf die Schwingungen des Drehmomentes, Kräfte zwischen Stator und Rotor und/oder Schwingungen im Spannungsverlauf der DC-Seite, von der vorab definierten Anzahl an harmonischen Anregungen oder Testsignalen auf den Antrieb kann im Vorfeld eingeschätzt werden, sodass beispielsweise bei einem Einsatz in einem Fahrzeug für das Verfahren günstige Betriebspunkte wählbar sind. Bevorzugt werden Schwingungen im Triebstrang oder Bordnetzschwingungen während des Verfahrens minimiert. Bevorzugt wird das Verfahren für eine integrierte elektrische Achse, bestehend aus der Drehfeldmaschine und einer an die Maschine mechanisch angebaute, bevorzugt mechanisch stark oder fest gekoppelte, oder integrierte Leistungselektronik bereitgestellt. Das Verfahren ermöglicht die Durchführung des Verfahrens für jede einzelne elektrische Maschine. Es kann sowohl am Ende der Produktionslinie und/oder während der Lebenszeit des elektrischen Antriebs beliebig, auch während eines regulären Fahrbetriebs durchgeführt werden. Bevorzugt umfasst eine Antriebskomponente (z.B. eine eAchse) den Sensor und das Verfahren. Es wird eine Möglichkeit bereitgestellt, das Verfahren während einer Inbetriebnahme, einer Prüfung am Bandende oder im Fahrbetrieb, ablaufen zu lassen. So können die Kalibrierparameter exemplarspezifisch, temperaturabhängig und/oder alterungsabhängig bestimmt und nachjustiert oder nachgelernt werden. Es wird ein Verfahren geschaffen, welches eine selbstlernende/selbstkalibrierende Regelung für einen elektrischen Antrieb bereitstellt. Eine Selbst-Kalibrierung für eine minimierte Schwingung des Drehmoments wird ermöglicht, die unabhängig von einem Prüfstand und externer Messsensorik abläuft.

In einer anderen Ausgestaltung der Erfindung umfasst das Verfahren das Einlesen eines Betriebspunktes der elektrischen Maschine, eines Inverters und/ oder einer Batterie und das Durchführen des Verfahrens in Abhängigkeit des erfassten Betriebspunktes.

Es wird ein Verfahren bereitgestellt, welches eine Berücksichtigung eines Betriebspunktes der elektrischen Maschine, eines Inverters und/ oder einer Batterie ermöglicht. Bevorzugt wird ein Betriebspunkt eines angetriebenen Getriebes oder des Antriebsstrangs berücksichtigt. Ein Betriebspunkt der elektrischen Maschine, des Inverters, der Batterie, des angetriebenen Getriebes oder des Antriebsstrangs kann beispielsweise ein angefordertes Drehmoment, eine Drehzahl, ein Strom, eine Spannung, eine Temperatur oder ein Alter der jeweiligen Bauteile sein. In Abhängigkeit des Betriebspunktes können auf den Betriebspunkt angepasste vorgebbare Testsignale dem ersten Signal überlagert werden.

Vorteilhaft wird ein Verfahren bereitgestellt, welches eine Berücksichtigung eines Betriebspunktes der elektrischen Maschine ermöglicht.

Ferner betrifft die Erfindung ein Computerprogramm, welches Befehle umfasst, die bei der Ausführung durch einen Computer diesen veranlassen, die Schritte des bisher beschriebenen Verfahrens auszuführen.

Ferner betrifft die Erfindung ein computerlesbares Speichermedium, umfassend Befehle, die bei der Ausführung durch einen Computer diesen veranlassen, die Schritte des bisher beschriebenen Verfahrens auszuführen.

Ferner betrifft die Erfindung eine Vorrichtung zur Kalibrierung einer Regelung einer elektrischen Maschine. Die Vorrichtung umfasst einen, bevorzugt mechanischen, Sensor. Weiter umfasst die Vorrichtung einen Schaltungsträger, wobei der Schaltungsträger einen Testsignalgenerator aufweist und eine Recheneinheit. Die Vorrichtung ist dazu eingerichtet, die Schritte des beschriebenen Verfahrens auszuführen.

Alternativ oder zusätzlich kann auch ein Strom bzw. Spannungsmesser eingesetzt werden, der beispielsweise auf der Gleichspannungsseite eines an die elektrische Maschine angeschlossenen Inverters angeordnet ist. Dieser erfasst resultierende Schwingungen im Strom/ Spannung als resultierendes Antwortsignal. Mittels des Verfahrens können die Schwingungen oder Spannungsrippel reduziert werden.

Vorteilhaft wird eine Vorrichtung zur Kalibrierung einer Regelung einer elektrischen Maschine bereitgestellt. Diese Vorrichtung umfasst einen, bevorzugt mechanischen, Sensor zur Erfassung des aus der Überlagerung des ersten Signals und des Testsignals resultierenden Antwortsignals. Die Vorrichtung umfasst weiter zur Vorgabe des Testsignals einen Testsignalgenerator und eine Recheneinheit zur Durchführung des beschriebenen Verfahrens.

In einer anderen Ausgestaltung der Erfindung ist der Sensor mechanisch fest oder im Wesentlichen starr mit der elektrischen Maschine verbunden. Alternativ ist der Sensor fest auf den Schaltungsträger aufgebaut und der Schaltungsträger fest an oder in der elektrischen Maschine integriert.

Für eine hoch aufgelöste und ungestörte Erfassung des Antwortsignals ist eine mechanisch feste Verbindung mit der elektrischen Maschine oder über einen Schaltungsträger, welcher an oder in der elektrischen Maschine angebracht ist, vorgesehen. Alternativ kann natürlich auch mit einem Sensor außerhalb der Vorrichtung oder Leistungselektronik durchgeführt werden, z.B. einem Mikrofon an oder neben der elektrischen Maschine oder auch mittels einem Körperschallsensor, beispielsweise ausgeführt als an einer Oberfläche, bevorzugt der elektrischen Maschine oder eines Steuergerätes oder Inverters, montierter Beschleunigungssensor.

Vorteilhaft wird eine Position zur Befestigung des Sensors für eine gute Signalübertragung bereitgestellt.

In einer anderen Ausgestaltung der Erfindung ist der mechanische Sensor ein Mikrofon, ein Beschleunigungssensor oder ein Körperschallsensor oder ein Drehzahlsensor, ein Drehmomentsensor oder eine Drehmomentenmesswelle.

Vorteilhaft werden Sensoren bereitgestellt, die zur Erfassung des Antwortsignals, welches aus der Schwingung des Drehmomentes oder Kraftschwingungen zwischen Rotor und Stator resultiert bereitgestellt. Die Schwingungen des Drehmomentes oder der Kräfte können akustisch, mittels Beschleunigungsmessung bevorzugt an einer mechanisch festen Einheit mit der elektrischen Maschine oder mittels Körperschall erfasst werden. Ebenso resultiert aus den Schwingungen des Drehmomentes eine Drehzahländerung der elektrischen Maschine, sodass auch mittels eines Drehzahlsensors eine Erfassung der Antwortsignale möglich ist.

Ferner betrifft die Erfindung ein elektrisches Antriebssystem mit einer elektrischen Maschine und einer beschriebenen Vorrichtung. Ein derartiges elektrisches Antriebssystem dient beispielsweise dem Antrieb eines elektrischen Fahrzeugs. Mittels des Verfahrens und der Vorrichtung wird ein optimierter Betrieb des Antriebstrangs ermöglicht.

Ferner betrifft die Erfindung ein Fahrzeug, mit einem beschriebenen Antriebssystem. Vorteilhaft wird somit ein Fahrzeug bereitgestellt, welches eine Vorrichtung umfasst, mit der eine Regelung einer elektrischen Maschine kalibriert werden kann.

Es versteht sich, dass die Merkmale, Eigenschaften und Vorteile des erfindungsgemäßen Verfahrens entsprechend auf die Vorrichtung bzw. das Antriebssystem und das Fahrzeug und umgekehrt zutreffen bzw. anwendbar sind.

Weitere Merkmale und Vorteile von Ausführungsformen der Erfindung ergeben sich aus der nachfolgenden Beschreibung mit Bezug auf die beigefügten Zeichnungen.

### Kurze Beschreibung der Zeichnung

Im Folgenden soll die Erfindung anhand einiger Figuren näher erläutert werden, dazu zeigen:
Figur 1
   eine schematische Darstellung einer Vorrichtung zur Kalibrierung einer Regelung einer elektrischen Maschine
Figur 2
   eine schematische Regelstruktur des Verfahrens zur Kalibrierung einer Regelung einer elektrischen Maschine.
Figur 3
   eine schematische Antwortfläche resultierender Antwortsignale
Figur 4
   ein schematisch dargestelltes Fahrzeug mit einem Antriebsstrang,
Figur 5
   ein schematisch dargestelltes Ablaufdiagramm für ein Verfahren zur Kalibrierung einer Regelung einer elektrischen Maschine.

### Ausführungsformen der Erfindung

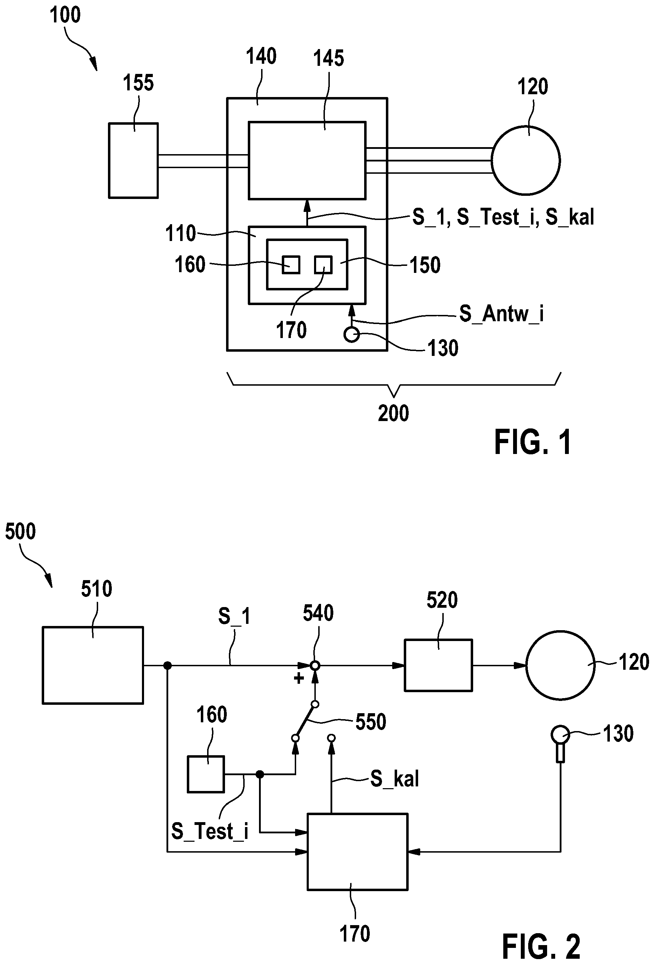

Die Figur 1 zeigt eine Vorrichtung 100 zur Kalibrierung einer Regelung 110 einer elektrischen Maschine 120. Die Vorrichtung umfasst einen Sensor 130, bevorzugt einen mechanischen Sensor, bevorzugt mit einer mechanisch starren oder festen direkten oder indirekten Verbindung zu der elektrischen Maschine 120. Weiter umfasst die Vorrichtung einen Schaltungsträger 150, wobei der Schaltungsträger einen Testsignalgenerator 160 aufweist und eine Recheneinheit 170. Bevorzugt ist die Regelung 110 in einem Inverter 140 integriert, wobei der Inverter eine Leistungselektronik 145, bevorzugt eine B6 Brücke, zur Speisung der anschließbaren Maschine 120 aus einer Batterie 155 umfasst. Ferner ist in Fig. 1 das elektrisches Antriebssystem 200 mit der Vorrichtung 100 und der elektrischen Maschine 120 dargestellt. In Abhängigkeit des ersten Testsignals S_1 und einer Mehrzahl an Testsignalen S_Test_i wird die Leistungselektronik 145 des Inverters 140 zur Kalibrierung der Regelung 110 der elektrischen Maschine 120 angesteuert. Mittels des Sensors 130 werden die Antwortsignale S_Antw_i erfasst. Nach Bestimmung des kalibrierten Signals S_kal wird in Abhängigkeit des ersten Testsignals S_1 und des kalibrierten Signals S_kal die Leistungselektronik 145 des Inverters 140 zum Betrieb der Regelung 110 der elektrischen Maschine 120 angesteuert.

Figur 2 zeigt eine schematische Regelstruktur 500 des Verfahrens zur Kalibrierung einer Regelung 110 einer elektrischen Maschine 120. Ein Signalgenerator 510 gibt ein erstes Signal S_1 aus. Dieses erste Signal S_1 wird mittels einem Addierer 540 mit einem Testsignal S_Test_i des Testsignalgenerators 160 überlagert für die Kalibrierung der Regelung 110 der elektrischen Maschine 120. Über eine Regelstrecke 520 wird in Abhängigkeit der überlagerten Signale die elektrische Maschine 120 angesteuert. Diese erzeugt ein Drehmoment, welches Schwingungen aufweist. Diese werden mittels eines Sensors 130 erfasst und als Antwortsignale S_Anfinr_i an eine Recheneinheit 170 zur Auswertung weitergeleitet. Die Recheneinheit 170 empfängt zur Auswertung ebenfalls das erste Signal S_1 und die Testsignale S_Test_i. Die Auswertung umfasst die Ermittlung eines Minimums einer sich ergebender Antwortfläche A_Antw aus den resultierenden Antwortsignalen S_Anfinr_i der mittels der Testsignale S_Test_i erzeugten harmonischen Schwingungen. Die Recheneinheit 170 ermittelt ein Minimum der Antwortfläche A_Antw und bestimmt in Abhängigkeit der Parameter des Minimums ein kalibriertes Signals S_kal zur Erzeugung einer harmonischen Schwingung mit einer vorbestimmten Anregungsamplitude und einer Phasenlage relativ zum Phasenstrom. Das kalibrierte Signal wird über einen Schalter 550 gewählt und mittels des Addierers 540 mit dem ersten Signal S_1 überlagert für den regulären Betrieb der Regelung 110 der elektrischen Maschine 120. Über den Schalter 550 kann das zur Überlagerung verwendete Testsignal S_Test_i oder kalibrierte Signal S_kal ausgewählt werden, je nachdem ob die Regelung 110 kalibriert wird oder regulär zum Betrieb der elektrischen Maschine 120 betrieben wird.

Die Figur 3 zeigt eine schematische Antwortfläche A_Antw, welche sich aus den resultierenden Antwortsignalen S_Antw_i der mittels der Testsignale S_Test_i erzeugten harmonischen Schwingungen ergibt. In z-Richtung ist die Größe der Antwortamplituden S_Antw_i_A der resultierenden Antwortsignale S_Antw_i aufgetragen. In y-Richtung ist die Phasenlage S_Test_i_Phi der mit dem Testsignal S_Test_i zu erzeugenden harmonischen Schwingung aufgetragen. In x-Richtung ist die Größe der Anregungsamplituden S_Test_i_A der mit dem Testsignal S_Test_i zu erzeugenden harmonischen Schwingung aufgetragen. Beispielhaft sind die vier Positionen der mittels der Testsignale erzeugten harmonischen Schwingungen entsprechenden Phasenlagen, Anregungsamplituden und Antwortsignale eingezeichnet, aus denen sich die Antwortfläche A_Antw, wie oben beschrieben, ergibt. Die Antwortfläche wird bevorzugt über vorgebbare Bereiche der Phasenlage, beispielsweise 0 bis 360 Grad, und der Anregungsamplitude, von beispielsweise -15 bis + 15, in Abhängigkeit der ermittelten Minima ermittelt. Weiter sind die, wie oben beschrieben, ermittelten Minima der Antwortfläche mittels der Höhenlinien und dem Verlauf der Antwortfläche in Fig.3 erkennbar. In Abhängigkeit mindestens einer Minimumphasenlage und mindestens einer Minimumamplitude werden die Parameter Anregungsamplitude und Phasenlage des mittels des kalibrierten Signals zu erzeugenden harmonischen Schwingung bestimmt und vorgegeben.

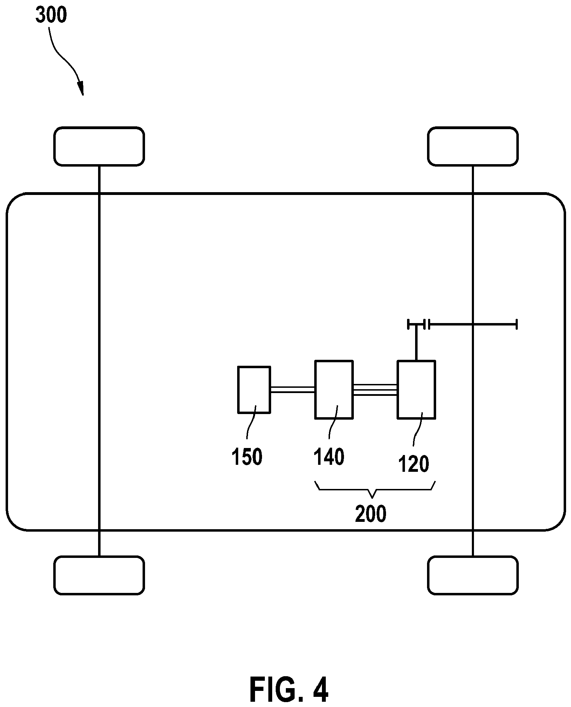

Die Figur 4 zeigt ein schematisch dargestelltes Fahrzeug 300 mit einem elektrischen Antriebssystem 200. Das Antriebssystem 200 umfasst die Vorrichtung 100 zur Kalibrierung der Regelung 110 der elektrischen Maschine 120 in dem Inverter 140 und die elektrische Maschine 210. Bevorzugt umfasst das elektrische Antriebssystem die Batterie 150.

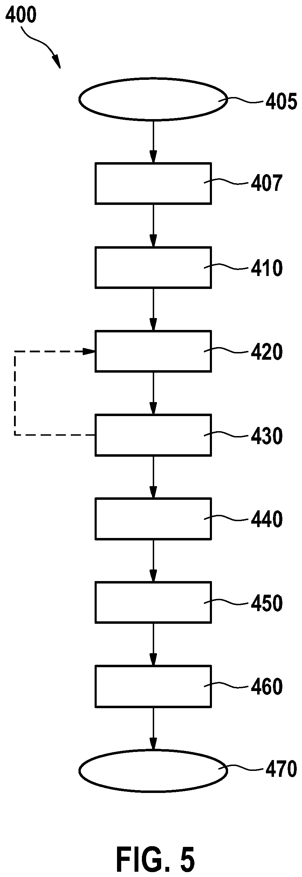

Die Figur 5 zeigt einen schematischen Ablauf eines Verfahrens 400 zur Kalibrierung einer Regelung einer elektrischen Maschine 120. Mit Schritt 405 startet das Verfahren. Bevorzugt folgt das Einlesen 407 eines Betriebspunktes der elektrischen Maschine 120, eines Inverters 140 und/ oder der Batterie 150 und Durchführen des Verfahrens in Abhängigkeit des erfassten Betriebspunktes. Das weitere Verfahren 400 umfasst die Schritte:
Vorgeben 410 eines ersten Signals S_1 zur Erzeugung eines sinusförmigen Phasenstroms zur Bestromung einer Wicklung einer elektrischen Maschine 120, Überlagern 420 des ersten Signals S_1 mit einem Testsignal S_Test_i zur Erzeugung mindestens einer harmonischen Schwingung, bevorzugt Oberschwingung einer vorgebbaren Ordnung, mit einer vorbestimmten Anregungsamplitude und/ oder Phasenlage relativ zum Phasenstrom, welche den Phasenstrom überlagert Erfassen 430 eines aus der Überlagerung des Phasenstroms und der harmonischen Schwingung resultierenden Antwortsignals S_Antw_i mittels eines Sensors 130;
mehrfaches Wiederholen der zwei vorhergehenden Schritte "Überlagern" 420 und "Erfassen" 430 mit unterschiedlichen Testsignalen S_Test_i, zur Erzeugung weiterer harmonischer Schwingungen mit vorgebbaren und/ oder unterschiedlichen Anregungsamplituden und/ oder Phasenlagen relativ zum Phasenstrom, welche den Phasenstrom überlagern,
Ermitteln 440 eines Minimums einer sich ergebenden mehrfach gewölbten Antwortfläche A_Antw aus den resultierenden Antwortsignalen S_Anfinr_i der mittels der Testsignale S_Test_i erzeugten harmonischen Schwingungen Bestimmen 450 eines kalibrierten Signals S_kal zur Erzeugung einer harmonischen Schwingung mit einer vorbestimmten Anregungsamplitude und einer Phasenlage relativ zum Phasenstrom in Abhängigkeit des ermittelten Minimums der Antwortfläche A_Antw, bevorzugt für welches ein Antwortsignal mit minimaler Antwortamplitude resultiert,
Betreiben 460 der Regelung 110 der elektrischen Maschine 120; wobei das erste Signal S_1 zur Erzeugung eines sinusförmigen Phasenstroms zur Bestromung einer Wicklung der elektrischen Maschine 120 vorgegeben wird und das kalibrierte Signal S_kal zur Erzeugung einer harmonischen Schwingung mit einer vorbestimmten Anregungsamplitude und einer Phasenlage relativ zum Phasenstrom überlagert wird. Mit Schritt 470 endet das Verfahren.

## Patentansprüche

1. Verfahren (400) zur Kalibrierung einer Regelung (110) einer elektrischen Maschine (120), mit den Schritten:
Vorgeben (410) eines ersten Signals (S_1) zur Erzeugung eines sinusförmigen Phasenstroms zur Bestromung einer Wicklung einer elektrischen Maschine (120),
**gekennzeichnet durch** die weiteren Schritte:
Schritt "Überlagern" (420): Überlagern (420) des ersten Signals (S_1) mit einem Testsignal (S_Test_i) zur Erzeugung mindestens einer harmonischen Schwingung mit einer vorbestimmten Anregungsamplitude und/ oder Phasenlage relativ zum Phasenstrom, welche den Phasenstrom überlagert,
Schritt "Erfassen" (430): Erfassen (430) eines aus der Überlagerung des Phasenstroms und der harmonischen Schwingung resultierenden Antwortsignals (S_Antw_i) mittels eines Sensors (130),
mindestens dreifaches Wiederholen der zwei vorhergehenden Schritte "Überlagern" (420) und "Erfassen" (430) mit unterschiedlichen, vorgegebenen Testsignalen (S_Test_i), zur Erzeugung weiterer harmonischer Schwingungen mit vorgebbaren Anregungsamplituden und/ oder Phasenlagen relativ zum Phasenstrom, welche den Phasenstrom überlagern,
Ermitteln (440) eines Minimums einer mehrfach gewölbten Antwortfläche (A_Antw), welche sich in Abhängigkeit der resultierenden Antwortsignale (S_Antw_i) der mittels der Testsignale (S_Test_i) erzeugten harmonischen Schwingungen, ergibt;
Bestimmen (450) eines kalibrierten Signals (S_kal) zur Erzeugung einer harmonischen Schwingung mit einer vorbestimmten Anregungsamplitude und einer Phasenlage relativ zum Phasenstrom in Abhängigkeit des ermittelten Minimums
Betreiben (460) der Regelung (110) der elektrischen Maschine (120); wobei das erste Signal (S_1) zur Erzeugung eines sinusförmigen Phasenstroms zur Bestromung einer Wicklung der elektrischen Maschine (120) vorgegeben wird und das bestimmte kalibrierte Signal (S_kal) zur Erzeugung der harmonischen Schwingung überlagert wird.

2. Verfahren (400) nach Anspruch 1, mit den weiteren Schritten:
Einlesen (407) eines Betriebspunktes der elektrischen Maschine (120), eines Inverters (140) und/ oder der Batterie (150) und
Durchführen des Verfahrens in Abhängigkeit des erfassten Betriebspunktes

3. Computerprogramm, umfassend Befehle, die bei der Ausführung des Programms durch einen Computer diesen veranlassen, das Verfahren/die Schritte des Verfahrens (400) nach Anspruch 1 bis 2 auszuführen.

4. Computerlesbares Speichermedium, umfassend Befehle, die bei der Ausführung durch einen Computer diesen veranlassen, das Verfahren/die Schritte des Verfahrens (400) nach Anspruch 1 bis 2 auszuführen.

5. Vorrichtung (100) zur Kalibrierung einer Regelung (110) einer elektrischen Maschine (120),
mit einem Sensor (130),
mit einem Schaltungsträger (150),
wobei der Schaltungsträger einen Testsignalgenerator (160) aufweist und eine Recheneinheit (170),
wobei die Vorrichtung dazu eingerichtet ist, die Schritte des Verfahrens nach einem der Ansprüche 1-2 auszuführen.

6. Vorrichtung (100) nach Anspruch 5,
wobei der Sensor (130) mechanisch fest mit der elektrischen Maschine (120) verbunden ist oder der Sensor (130) fest auf den Schaltungsträger (150) aufgebaut ist und der Schaltungsträger (150) fest an oder in der elektrischen Maschine (120) integriert ist.

7. Vorrichtung (100) nach Anspruch 6, wobei der Sensor (130) ein Mikrofon, ein Beschleunigungssensor oder Körperschallsensor oder ein Drehzahlsensor ist.

8. Elektrisches Antriebssystem (200) mit einer elektrischen Maschine (120) und einer Vorrichtung (100) nach einem der Ansprüche 5 bis 7.

9. Fahrzeug (300) mit einem elektrischen Antriebssystem (200) nach Anspruch 8.

## Claims

1. Method (400) for calibrating a controller (110) of an electric machine (120), having the following steps:
specifying (410) a first signal (S_1) for generating a sinusoidal phase current to energize a winding of an electric machine (120),
**characterized by** the further steps of:
"superimposing" step (420): superimposing (420) the first signal (S_1) with a test signal (S_Test_i) to generate at least one harmonic oscillation, having a predetermined excitation amplitude and/or phase position relative to the phase current, which is superimposed on the phase current,
"detecting" step (430): detecting (430) a response signal (S_Antw_i) resulting from the superimposition of the phase current and the harmonic oscillation by means of a sensor (130),
repeating the two preceding steps "superimposing" (420) and "detecting" (430) at least three times using different specified test signals (S_Test_i) to generate further harmonic oscillations having specifiable excitation amplitudes and/or phase positions relative to the phase current, which are superimposed on the phase current,
ascertaining (440) a minimum of a multiply curved response area (A_Antw), which results as a function of the resulting response signals (S_Antw_i) of the harmonic oscillations generated by means of the test signals (S_Test_i), determining (450) a calibrated signal (S_kal) to generate a harmonic oscillation having a predetermined excitation amplitude and a phase position relative to the phase current as a function of the ascertained minimum,
operating (460) the controller (110) of the electric machine (120); wherein the first signal (S_1) for generating a sinusoidal phase current is specified to energize a winding of the electric machine (120) and the determined calibrated signal (S_kal) is superimposed to generate the harmonic oscillation.

2. Method (400) according to Claim 1, having the further steps:
reading in (407) an operating point of the electric machine (120), an inverter (140), and/or the battery (150) and
carrying out the method as a function of the detected operating point.

3. Computer program, comprising commands which, upon the execution of the program by a computer, cause it to carry out the methods/the steps of the method (400) according to Claims 1 to 2.

4. Computer-readable storage medium, comprising commands which, upon the execution by a computer, cause it to carry out the methods/the steps of the method (400) according to Claims 1 to 2.

5. Device (100) for calibrating a controller (110) of an electric machine (120),
having a sensor (130),
having a circuit carrier (150),
wherein the circuit carrier has a test signal generator (160) and a computing unit (170),
wherein the device is configured to carry out the steps of the method according to one of Claims 1 to 2.

6. Device (100) according to Claim 5,
wherein the sensor (130) is mechanically fixedly connected to the electric machine (120) or the sensor (130) is fixedly attached to the circuit carrier (150) and the circuit carrier (150) is fixedly integrated on or in the electric machine (120).

7. Device (100) according to Claim 6, wherein the sensor (130) is a microphone, an acceleration sensor or a structure-borne sound sensor or a speed sensor.

8. Electric drive system (200) having an electric machine (120) and a device (100) according to any one of Claims 5 to 7.

9. Vehicle (300) having an electric drive system (200) according to Claim 8.

## Revendications

1. Procédé (400) pour étalonner une commande (110) d'une machine électrique (120), comprenant les étapes suivantes :
prédéfinir (410) un premier signal (S_1) pour générer un courant de phase sinusoïdal destiné à alimenter un enroulement d'une machine électrique (120), **caractérisé par** les étapes supplémentaires suivantes :
étape de "superposition" (420) : superposition (420) du premier signal (S_1) à un signal de test (S_Test_i) pour générer au moins une oscillation harmonique ayant une amplitude d'excitation et/ou une position de phase prédéterminée par rapport au courant de phase, qui se superpose au courant de phase,
étape d'"acquisition" (430) : acquisition (430) d'un signal de réponse (S_Antw_i) résultant de la superposition du courant de phase et de l'oscillation harmonique au moyen d'un capteur (130),
répétition au moins trois fois des deux étapes de "superposition" (420) et d"'acquisition" (430) précédentes avec différents signaux de test prédéfinis (S_Test_i), pour générer d'autres oscillations harmoniques ayant des amplitudes d'excitation et/ou des positions de phase prédéfinissables par rapport au courant de phase, qui se superposent au courant de phase,
détermination (440) d'un minimum d'une surface de réponse à courbure multiple (A_Antw), qui est obtenue en fonction des signaux de réponse résultants (S_Antw_i) des oscillations harmoniques générées au moyen des signaux de test (S_Test_i) ;
détermination (450) d'un signal étalonné (S_kal) pour générer une oscillation harmonique ayant une amplitude d'excitation prédéterminée et une position de phase par rapport au courant de phase en fonction du minimum déterminé,
actionnement (460) de la commande (110) de la machine électrique (120) ; le premier signal (S_1) étant prédéfini pour générer un courant de phase sinusoïdal destiné à alimenter un enroulement de la machine électrique (120) et le signal étalonné déterminé (S_kal) étant superposé pour générer l'oscillation harmonique.

2. Procédé (400) selon la revendication 1, comprenant les étapes supplémentaires suivantes :
lecture (407) d'un point de fonctionnement de la machine électrique (120), d'un onduleur (140) et/ou de la batterie (150) et
mise en oeuvre du procédé en fonction du point de fonctionnement acquis.

3. Produit de programme informatique, comprenant des instructions qui, lors de l'exécution du programme par un ordinateur, amènent celui-ci à mettre en oeuvre le procédé/les étapes du procédé (400) selon les revendications 1 à 2.

4. Support de stockage lisible par ordinateur comprenant des instructions qui, lorsqu'elles sont exécutées par un ordinateur, amènent ce dernier à mettre en oeuvre le procédé/les étapes du procédé (400) selon les revendications 1 à 2.

5. Dispositif (100) destiné à étalonner une commande (110) d'une machine électrique (120),
comprenant un capteur (130),
comprenant un support de circuit (150),
le support de circuit comportant un générateur de signaux de test (160) et une unité de calcul (170),
le dispositif étant conçu pour mettre en oeuvre les étapes du procédé selon l'une des revendications 1 -2.

6. Dispositif (100) selon la revendication 5,
dans lequel le capteur (130) est relié mécaniquement de manière fixe à la machine électrique (120) ou le capteur (130) est monté de manière fixe sur le support de circuit (150) et le support de circuit (150) est intégré de manière fixe à ou dans la machine électrique (120).

7. Dispositif (100) selon la revendication 6, dans lequel le capteur (130) est un microphone, un capteur d'accélération ou un capteur de bruit de structure ou un capteur de vitesse de rotation.

8. Système d'entraînement électrique (200) comprenant une machine électrique (120) et un dispositif (100) selon l'une des revendications 5 à 7.

9. Véhicule automobile (300) comprenant un système d'entraînement électrique (200) selon la revendication 8.
